(19) Europäisches Patentamt / European Patent Office / Office européen des brevets

(11) **EP 3 337 212 A1**

(12) **EUROPEAN PATENT APPLICATION**
published in accordance with Art. 153(4) EPC

(43) Date of publication:
**20.06.2018 Bulletin 2018/25**

(51) Int Cl.:
**H04W 16/14** (2009.01)   **H04W 72/04** (2009.01)

(21) Application number: **16835185.6**

(22) Date of filing: **09.08.2016**

(86) International application number:
**PCT/JP2016/073469**

(87) International publication number:
**WO 2017/026488 (16.02.2017 Gazette 2017/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.08.2015 JP 2015159988**

(71) Applicant: **NTT DOCOMO, INC.**
**Chiyoda-ku**
**Tokyo 100-6150 (JP)**

(72) Inventors:
• **HARADA, Hiroki**
  **Tokyo 100-6150 (JP)**
• **TAKEDA, Kazuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, AND WIRELESS COMMUNICATION METHOD**

(57) The present invention is designed to allow co-presence with other systems, and, furthermore, achieve improved spectral efficiency in cells (for example, unlicensed bands) in which pre-transmission listening is employed. A user terminal communicates with a radio base station by executing listening before transmitting UL signals, and has a transmission section that transmits UL signals, and a control section that controls the transmission of UL signals by controlling the random backoff counter value in listening, and, in this user terminal, the control section determines the random backoff counter value based on information that is reported from the radio base station and/or based on predetermined parameter information.

FIG. 6

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). The specifications of LTE-advanced (Rel. 10 to 12) have been drafted for the purpose of achieving further broadbandization and higher speeds beyond LTE, and, in addition, for example, a successor system of LTE -- referred to as "5G" (5th generation mobile communication system)is under study.

In LTE of Rel. 8 to 12, the specifications have been drafted assuming exclusive operations in frequency bands that are licensed to operators -- that is, licensed bands. As licensed bands, for example, 800 MHz, 2 GHz and/or 1.7 GHz are used.

User traffic has been increasing steeply following the spread of high-performance user terminals/user equipment (referred to as "UE") such as smart-phones and tablets. Although more frequency bands need to be added to meet this increasing user traffic, licensed bands have limited spectra (licensed spectra). Consequently, a study is in progress to enhance the frequencies of LTE systems by using bands of unlicensed spectra (hereinafter referred to as "unlicensed bands") that are available for use apart from licensed bands (see non-patent literature 2).

For unlicensed band, for example, 2.4 GHz, which is the same as in Wi-Fi (registered trademark), or the 5 GHz band and/or the like may be used. With Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). In the future, dual connectivity (DC) between licensed bands and unlicensed bands and stand-alone in unlicensed bands may become the subject of study under LAA.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP to 131701

### Summary of Invention

### Technical Problem

A study is in progress to introduce interference control functionality to unlicensed bands, in order to allow co-presence with other operators' LTE, Wi-Fi or different systems. In Wi-Fi, LBT (Listen Before Talk), which is based on CCA (Clear Channel Assessment), is used as an interference control function within the same frequency.

Consequently, when unlicensed bands are configured in LTE systems, UL transmission and/or DL transmission may be controlled by implementing "listening" (for example, LBT) as an interference control function. In this case, there is a demand to enable both efficient and fair co-presence with other systems (for example, Wi-Fi) and other LTE operators, and efficient operation of frequencies.

The present invention has been made in view of the above, and it is therefore an object of the present invention to provide a user terminal, a radio base station and a radio communication method that can allow co-presence with other systems in cells (for example, unlicensed bands) in which pre-transmission listening is employed, and that can achieve improved spectral efficiency.

### Solution to Problem

One aspect of the present invention provides a user terminal that communicates with a radio base station by executing listening before transmitting UL signals, and this user terminal has a transmission section that transmits UL signals, and a control section that controls the transmission of UL signals by controlling the random backoff counter value in listening, and the control section determines the random backoff counter value based on information that is reported from the radio base station and/or based on predetermined parameter information.

Advantageous Effects of Invention

According to the present invention, it is possible to allow co-presence with other systems, and, furthermore, achieve improved spectral efficiency in cells in which pre-transmission listening is employed (for example, unlicensed bands).

Brief Description of Drawings

FIG. 1A is a diagram to show an example of an FBE radio frame configuration, and FIG. 1B is a diagram to show an example of an LBE radio frame configuration;
FIG. 2 is a diagram to show examples of a burst period that is configured for transmission after DL-LBT;
FIG. 3A is a diagram to show an example of an existing TDD subframe configuration, and FIG. 3B is a diagram to show an example of a subframe configuration in LAA;
FIG. 4 is diagram to show an example of a case where random backoff is applied to listening;
FIG. 5 is a diagram to show an example of a case where random backoff is controlled separately between multiple user terminals;
FIG. 6 is a diagram to show an example of a random backoff control method according to the present embodiment;
FIG. 7 is a diagram to show another example of a random backoff control method according to the present embodiment;
FIG. 8 is a diagram to show another example of a random backoff control method according to the present embodiment;
FIG. 9 is a schematic diagram to show an example of a radio communication system according to the present embodiment;
FIG. 10 is a diagram to explain an overall structure of a radio base station according to the present embodiment;
FIG. 11 is a diagram to explain a functional structure of a radio base station according to the present embodiment;
FIG. 12 is a diagram to explain an overall structure of a user terminal according to the present embodiment; and
FIG. 13 is a diagram to explain a functional structure of a user terminal according to the present embodiment.

Description of Embodiments

As mentioned earlier, in unlicensed bands, interference control functionality is necessary in order to allow co-presence with other operators' LTE, Wi-Fi (registered trademark), or different systems. In Wi-Fi, the function called "LBT" (Listen Before Talk), which is based on CCA (Clear Channel Assessment), is implemented as an interference control function for use within the same frequency. In Japan and Europe, the LBT function is stipulated as mandatory in systems that are run in the 5 GHz unlicensed band, such as Wi-Fi.

Consequently, a study is in progress to apply interference control within the same frequency by executing listening before transmitting signals even in systems where LTE/LTE-A is run in unlicensed bands (for example, LAA systems). In a carrier in which listening is configured, radio base stations and user terminals of a plurality of systems may use the same frequency bands on a shared basis.

The application of listening makes it possible to prevent interference between LAA and Wi-Fi, interference between LAA systems, and so on. Furthermore, even when user terminals that can be connected are controlled independently for every operator that runs an LAA system, it is possible to reduce interference without learning the details of each operator's control, by means of listening.

Here, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT" (Listen Before Talk), "CCA" (Clear Channel Assessment), "carrier sensing" and so on.

For example, when LBT is employed in an LTE system, a transmission point (an LTE-U base station and/or a user terminal) performs listening (LBT, CCA) before transmitting UL signals and/or DL signals in an unlicensed band. Then, if no signals from other systems (for example, Wi-Fi) and/or other LAA transmission points are detected, the transmission point carries out communication in the unlicensed band.

If received power that is equal to or lower than a predetermined threshold is measured in LBT, the transmission point judges that the channel is in the idle state (LBT_idle), and carries out transmission. When a "channel is in the idle state," this means that, in other words, the channel is not occupied by a certain system, and it is equally possible to say that a channel is "idle," a channel is "clear," a channel is "free," and so on.

On the other hand, when the received power that is measured in LBT exceeds a predetermined threshold, the transmission point judges that the channel is in the busy state (LBT_busy), and limits transmission. Procedures that are taken when listening yields the result "LBT-busy" include (1) making a transition to another carrier by way of DFS (Dynamic Frequency Selection), (2) applying transmission power control (TPC), (3) holding transmission (stopping transmission or waiting for transmission), and so on. In the event LBT_busy is yielded, LBT is carried out again with respect to this channel, and the channel becomes available for use only after it is confirmed that the channel is in the idle state. Note that the method of judging whether a channel is in the idle state/busy state based on LBT is by no means limited to this.

For example, assume a case where, when a user terminal that communicates by using a carrier (which may also be referred to as a "frequency") of an unlicensed band detects another entity (another user terminal and/or the like) that is communicating in this unlicensed band carrier, transmission is banned in this carrier. In this case, this user terminal executes LBT at a timing that is a predetermined period ahead of a transmission timing. By executing LBT, the user terminal searches the whole band of the applicable carrier at a timing that is a predetermined period ahead of a transmission timing, and checks whether or not other devices (radio base stations, LAA-UEs, Wi-Fi devices and so on) are communicating in this carrier's band. Only if it is confirmed that no such communication is in progress, is transmission carried out using this carrier. On the other hand, if only just a portion of the band is detected to be used by another devicethat is, if the received power of a signal from another device entering this band exceeds a threshold -- the transmission point stops its transmission. Here, if the received signal power in the LBT period is higher than a predetermined threshold, the channel is judged to be in the busy state (LBTbusy). If the received signal power in the LBT period is lower than the predetermined threshold, the channel is judged to be in the idle state (LBTidle).

Also, there are roughly two types of LBT mechanisms -- namely, LBE (Load-Based Equipment) and FBE (Frame-Based Equipment). With LBE, initial CCA is executed, and transmission is started if LBT-idle is yielded, or the ECCA (extended CCA) procedure is executed if LBT-busy is yielded. That is, LBE refers to a mechanism of extending the carrier sensing duration when the result of carrier sensing shows that the channel cannot be used, and continuing executing carrier sensing until the channel becomes available for use. In LBE, random backoff is required to avoid contention adequately.

FBE executes carrier sensing in fixed timings and in a fixed cycle, and starts transmission if LBT-idle is yielded, or waits until the next carrier sensing timing if LBT-busy is yielded. That is, FBE has a fixed frame cycle, and is a mechanism of carrying out transmission if the result of executing carrier sensing in a predetermined frame shows that a channel is available for use, and not making transmission but waiting until the next carrier sensing timing if no channel can be used.

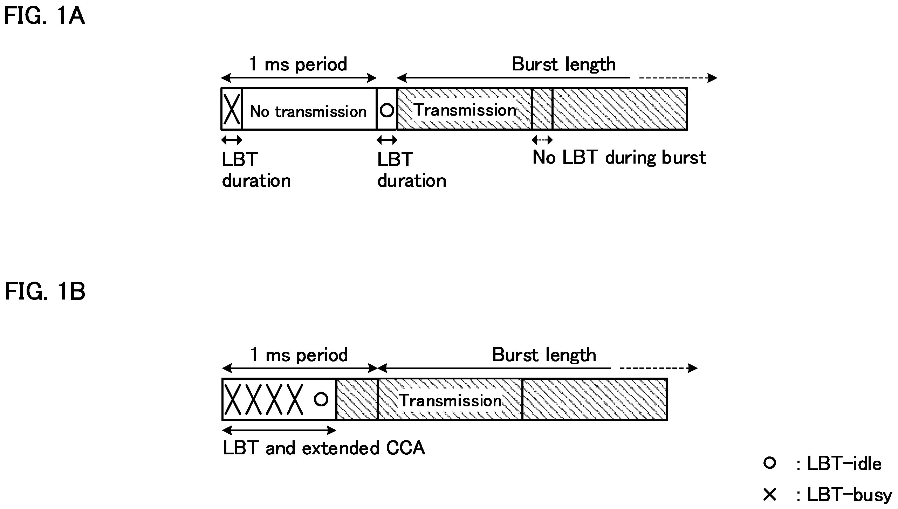

FIGs. 1 provide diagrams, each showing an example of a radio frame configuration in LBT. FIG. 1A shows an example of an FBE radio frame configuration. In the event of FBE, the LBT duration and the LBT cycle are fixed, and LBT is performed in a predetermined number of symbols (for example, one to three symbols) and a cycle (for example, every 1 ms). Meanwhile, FIG. 1B shows an example of an LBE radio frame configuration. In the event of LBE, the LBT duration is not fixed. For example, LBT symbols may continue until a predetermined condition is fulfilled. To be more specific, a transmission point may continue executing LBT until LBT-idle is observed. Note that, although the present embodiment can be suitably applied to LBE, which uses random backoff, this is by no means limiting.

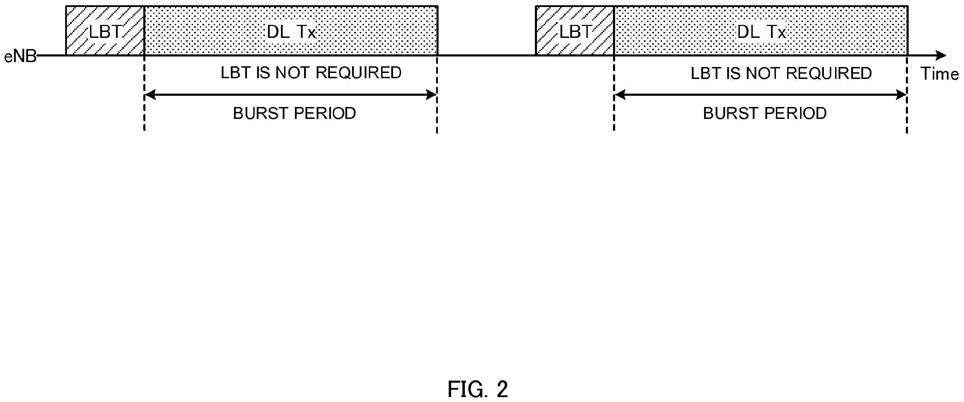

For example, in DL communication, when the result of listening for DL transmission (DL-LBT) which a radio base station executes shows LBT-idle, the radio base station is allowed to skip LBT and transmit signals (DL burst transmission) for a predetermined period (see FIG. 2). In cells where listening is employed, the period after listening (after LBT-idle is yielded) in which transmission can be made without executing LBT is referred to as the "burst period" (also referred to as the "burst transmission period," "burst length," "maximum burst length," "maximum possible burst length" and so on). In UL transmission, too, UL burst transmission can be carried out based on listening (UL-LBT) results, as in DL.

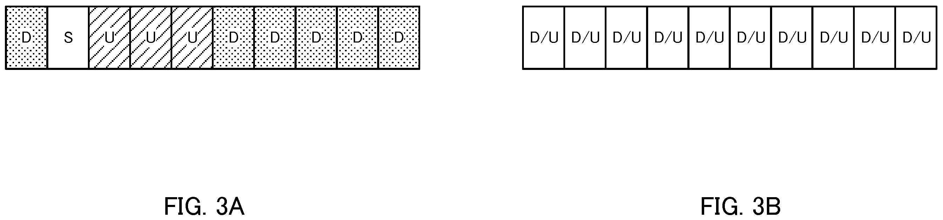

Also, when DL transmission and UL transmission are supported in the same unlicensed carrier (DL/UL LAA), DL burst transmission and UL burst transmission can be time-division-multiplexed (TDM) and scheduled. In TDD in existing LTE systems, the arrangement pattern of DL subframes and UL subframes is configured on a fixed basis (see FIG. 3A). By contrast with this, DL/UL LAA may flexibly time-multiplex DL burst transmission and UL burst transmission and control transmission, without fixing DL burst transmission and UL burst transmission (see FIG. 3B).

In this way, even in LTE/LTE-A systems that use unlicensed bands, listening may be used before UL transmission and/or DL transmission are made. In this case, there is a demand to enable both efficient and fair co-presence with other systems (for example, Wi-Fi) and other LTE operators, and efficient operation of frequencies.

To enable fair co-presence with other systems (for example, Wi-Fi), it may be possible to apply random backoff to listening when LTE/LTE-A systems are used in unlicensed bands. Random backoff refers to the mechanism, whereby, even when a channel enters the idle state, each transmission point does not start transmission soon, but holds transmission for a randomly-configured period (counter value) and then starts transmission when the channel is clear.

For example, when a channel is in the occupied state (busy state) in an unlicensed band, each transmission point (access point) starts transmitting data when the channel is judged to be in the idle state based on listening. In this case, if a plurality of transmission points that have been waiting for the channel to enter the idle state start transmitting all at once, this has a high possibility of leading to collisions between transmission points. So, in order to reduce collisions between transmission points, each transmission point does not start transmission soon even when a channel assumes the idle state, but holds transmission for a randomly-configured period to reduce the likelihood of collisions between transmission points (random backoff).

The backoff period that is configured in each transmission point can be determined based on counter values (random values), which are configured on a random basis. The range of counter values is determined based on the contention window (CW) size, and, for example, the counter values for random backoff are configured on a random basis from the range of 1 to the CW size (integer value).

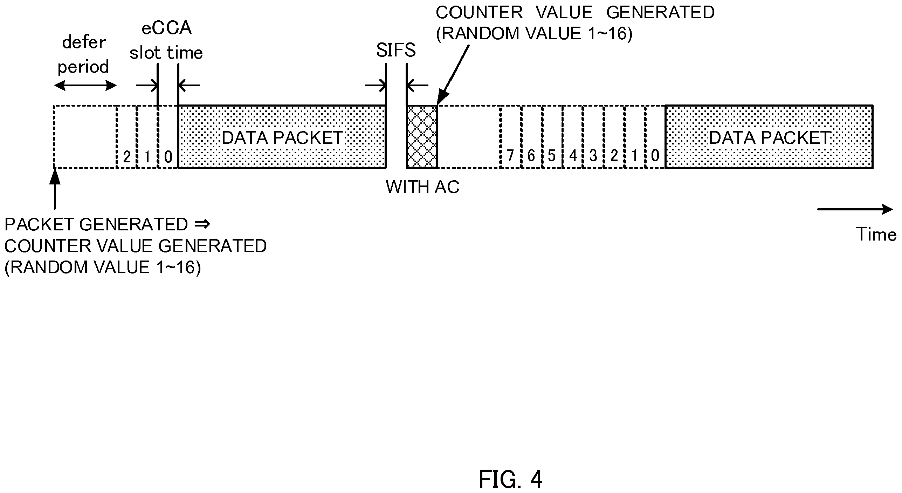

FIG. 4 shows an example of application of random backoff. A transmission point generates a counter value for random backoff when judging that a channel is in the idle state based on CCA. Then, the transmission point retains the counter value until it is confirmed that the channel has been idle for a waiting time of a predetermined period (also referred to as "defer period" (D_eCCA)). When it is confirmed that the channel has been idle for predetermined period, the transmission point can then perform sensing in a predetermined time unit (for example an eCCA slot time unit), lower the counter value if the channel is idle, and make transmission when the counter value becomes zero.

In random backoff, the counter value is determined from a range that is associated with the CW size. FIG. 4 shows a case where a random value is detected from 1 to 16 in the backoff period. In this way, by controlling transmission based on the counter value for random backoff in listening, it is possible to distribute transmission opportunities among a plurality of transmission points and guarantee fairness.

Also, when an LTE system is used in an unlicensed band, too, a transmission point (a radio base station and/or a user terminal) might use random backoff upon listening before UL transmission and/or DL transmission, as in Wi-Fi.

However, although Wi-Fi presumes that one burst transmission from one transmission point is basically sent to only one receiving point. By contrast, in LTE/LTE-A systems (LAA), cases might occur where a radio base station commands UL transmission to a plurality of user terminals, and multiplex UL transmissions from multiple user terminals (for example, in UL MU-MIMO and so on).

When multiplexing UL transmissions from a plurality of user terminals, the radio base station transmits UL transmission commands to the user terminals at the same timing (for example, in the same subframe). The user terminals, receiving the UL transmission command at the same timing, control the transmission of UL signals at the same timing. However, in this case, if the backoff time varies (different counter values are configured) between the user terminals having received the UL transmission command at the same timing, there is a threat that multiplex transmission may not be possible between the user terminals. For example, a case might occur where UL transmission which a given user terminal has started earlier makes the result of listening by another user terminal in the random backoff period indicate the busy state (LBT-busy), and limits the other user terminal's UL transmission.

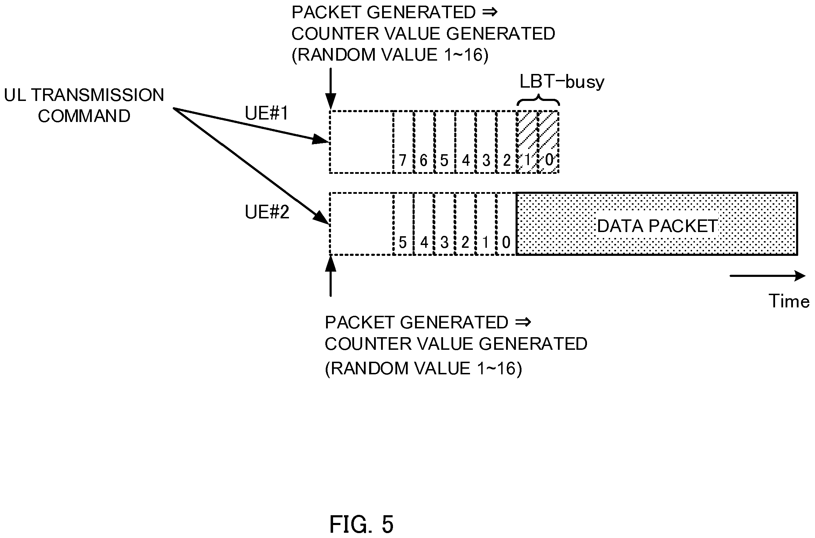

FIG. 5 shows a case where a first user terminal (UE #1) and a second user terminal (UE #2) that each receives a UL transmission command in the same subframe produce different random backoff counter values. To be more specific, FIG. 5 shows a case where the counter value "7" is configured for the first user terminal, and the counter value "5" is configured for the second user terminal. In this case, the second user terminal's UL transmission (data packet), which starts being transmitted earlier, may have an impact on the listening by the first user terminal. In this way, when random backoff counter values are configured independently between user terminals that carry out UL transmission, it becomes possible to use multiplex transmission between user terminals in UL transmission.

So, assuming the case where listening is employed in LTE/LTE-A systems (LAA), the present inventors have come up with the idea of controlling user terminals that are multiplexed in UL transmission to have matching random backoff counter values. For example each user terminal determines the random backoff counter value based on information reported from a radio base station and/or based on predetermined parameter information.

By this means, user terminals that are multiplexed in UL transmission (for example, user terminals that receive UL transmission commands in the same subframe) can be adequately multiplexed, and transmission can be controlled accordingly. As a result of this, it is possible to improve spectral efficiency in carriers where listening is employed (for example, unlicensed carriers). Also, it is possible to allow co-presence with other systems by employing random backoff.

Now, the present embodiment will be described in detail below with reference to the accompanying drawings. Although the present embodiment will be described assuming that a frequency carrier in which listening (LBT) is not configured is a licensed band and a frequency carrier in which listening is configured is an unlicensed band, this is by no means limiting. The present embodiment is applicable to any carriers (or cells) in which listening is configured, regardless of whether a carrier is a licensed band or an unlicensed band.

Also, although, in the following description, the transmission of UL data (for example, the PUSCH, the PUCCH and so on) based on UL transmission commands (UL grants) reported from the radio base stations will be described as an example of UL transmission to which the present embodiment can be suitably applied for control, this is by no means limiting. The present embodiment is equally applicable to other UL transmissions as well (for example, ACK/NACK feedback, aperiodic channel state information (A-CSI) feedback, aperiodic sounding reference signal (A-SRS) feedback, and so on).

Also, although cases will be shown in the following description where listening is employed in LTE/LTE-A systems, the present embodiment is by no means limited to this. The present embodiment is equally applicable to any systems that execute listening before transmitting signals, and that control UL transmission by using random backoff.

(First Example)

A case will be described with the first example where the counter value for random backoff is controlled based on information that is reported from radio base stations and/or based on predetermined parameter information.

A radio base station can include information about the random backoff counter value to apply to listening (UL-LBT), in downlink control information (DCI), and report this to a user terminal. The user terminal determines the counter value based on the information about the random backoff counter value, included in the downlink control information. The information about the random backoff counter value may be the counter value itself, which the user terminal uses, or a value to use to generate the counter value (seed value).

<Report from radio base station >

The radio base station can include and send the information about the random backoff counter value in downlink control information that is transmitted at the same time with a UL transmission command. In this case, the user terminal can receive the UL transmission command and the information about the random backoff counter value, which is used in listening executed before UL transmission, at the same time.

Alternatively, the radio base station can include the information about the random backoff counter value in downlink control information that is transmitted in a subframe after the UL transmission command is transmitted. In this case, the user terminal can receive the information about the random backoff counter value after receiving the UL transmission command, and before starting listening for UL transmission.

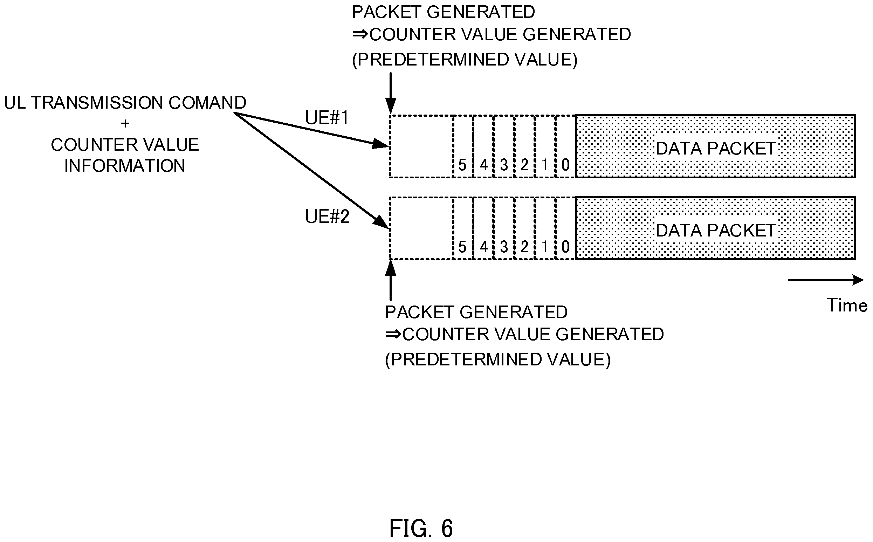

FIG. 6 shows an example of random backoff in UL-LBT in a plurality of user terminals (a first user terminal and a second user terminal). A radio base station reports UL transmission commands to the first user terminal and the second user terminal at the same timing (for example, in the same subframe). The first user terminal and the second user terminal each transmit a UL signal in a subframe a predetermined period (for example, 4 ms) after the UL transmission command is received. That is, the radio base station controls the UL transmissions of the first user terminal and the second user terminal to be multiplexed.

Also, if the first user terminal and the second user terminal execute listening before transmitting the UL signal and LBT-idle is yielded, the first user terminal and the second user terminal wait a predetermined period (random backoff counter value) and then transmit the UL signal. With the present embodiment, the first user terminal and the second user terminal can generate the same counter value (here, the counter value = 5) based on the information about the random backoff counter value reported from the radio base station.

In this case, the radio base station can include information to indicate the random backoff counter value 5 in downlink control information and transmit this. Alternatively, the radio base station can include the value (seed value) to use to generate random backoff counter values in downlink control information and report this to the user terminals, and each user terminal may generate the counter value 5 based on the seed value.

The radio base station can transmit the information about the random backoff counter value to the user terminals by using a downlink control channel that contains a newly defined RNTI (Radio Network Temporary Identifier). In this case, the radio base station transmits information about the RNTI to the user terminals by using downlink control information and so on, and the user terminals receive the PDCCH based on the information reported. Note that, when the information about the random backoff counter value is included in downlink control information, a predetermined field in existing DCI formats can be used.

Also, the radio base station can report the information about the random backoff counter value to the user terminals by using higher layer signaling (for example, RRC signaling, broadcast information, and so on). For example, a value (seed value) that can be used to generate random backoff counter values can be included in higher layer signaling and transmitted to each user terminal.

<Predetermined parameter information >

Every user terminal can control the random backoff counter value based on predetermined parameter information. For the predetermined parameter information, at least one of the system frame number in which a UL signal is transmitted, the subframe number, the identifier of the cell where the UL signal is transmitted, and the contention window size (CW size) to apply to listening can be used. In other words, counter values are generated by using parameter information that is common between user terminals, so that it is possible to allow different user terminals to generate the same counter values.

For example, user terminals can set forth and employ an equation for generating counter values by using a system frame number, a subframe number, a cell ID and a CW size. For example, each user terminal can determine random backoff counter values by using following equation 1:

$$\text{Counter value} = \text{Mod (system frame number} \times 10 + \text{subframe number} + \text{cell ID, CW size)} \qquad \ldots \text{(Equation 1)}$$

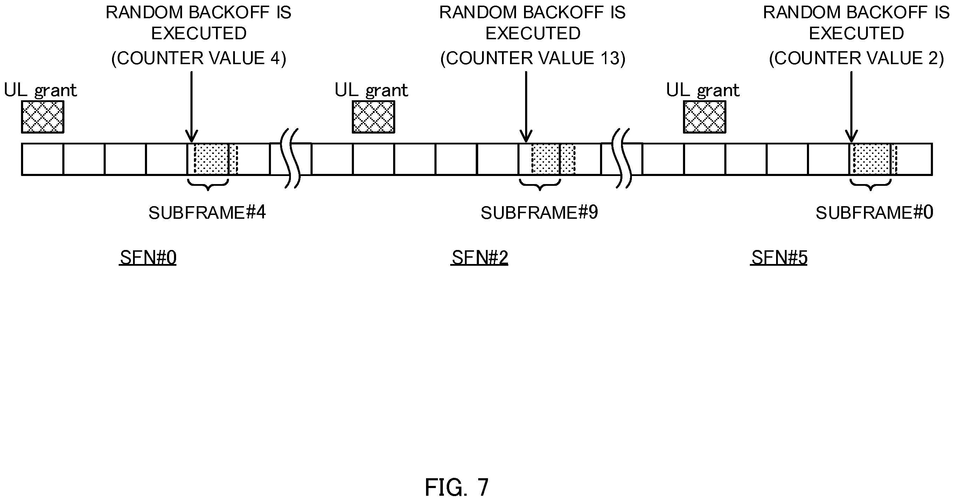

FIG. 7 shows an example of a case where a plurality of user terminals control random backoff in UL-LBT by using above equation 1. FIG. 7 assumes a case where the cell ID is #0 and the CW size is configured to 16.

When making UL transmission based on a UL transmission command, a user terminal generates a random backoff counter value based on, for example, the system frame number (SFN), the subframe number and the cell ID where this UL transmission takes place. For example, the user terminal that makes UL transmission in subframe #4 of SFN #0 configures the counter value to 4 (= Mod ($0 \times 10 + 4 + 0$, 16)) and applies random backoff. Also, the user terminal that makes UL transmission in subframe #9 of SFN #2 configures the counter value to 13 (= Mod ($2 \times 10 + 9 + 0$, 16)) and applies random backoff. Furthermore, the user terminal that makes UL transmission in subframe #0 of SFN #5 configures the counter value to 2 (= Mod ($5 \times 10 + 0 + 0$, 16)) and applies random backoff.

Note that, "subframe number + cell ID" in above equation 1 may be replaced by other elements. For example, a seed value, which can be reported in downlink control information and/or higher layer signaling, can be used as another element.

Note that user terminals in which a common counter value is configured can be controlled to start UL transmission at the timing the counter value expires (becomes zero). In this case, it is possible to control the user terminals to start UL transmission at the timing listening is finished (which may be, for example, the top of a subframe, the middle of a subframe, and so on), based on the counter value configured, the result of LBT and so on, and finish the UL transmission a certain period later. The certain period (the timing to finish the UL transmission) may be a predetermined period (for example, 1 ms) after the timing the UL transmission is started, or may be determined based on a predetermined timing such as the next subframe boundary.

By thus allowing every user terminal to determine the random backoff counter value based on predetermined parameter information, it is possible to allow user terminals that are multiplexed in UL transmission to coordinate their transmission timings, and carry out adequate UL multiplex transmission. By this means, it is possible to improve spectral efficiency. Furthermore, it is possible to allow co-presence with other systems by employing random backoff.

<UL transmission control>

If a user terminal judges that a channel is in the busy state (when the counter value freezes) while counting down random backoff, it is possible to control the user terminal to discard the counter value and not to transmit (that is, to "drop") UL signals.

In this case, the user terminal may report, to a radio base station, information to the effect that UL transmission has failed (for example, DTX) and/or information about the counter value of when a channel was judged to be in the busy state. The radio base station can control the timings of the next and subsequent UL transmissions, the random backoff counter values to apply to these UL transmissions and so on, based on the counter value-related information reported from each user terminal.

<Variation>

Cases might occur where a user terminal is unable to acquire information about the random backoff counter value that is transmitted from a radio base station, or acquire predetermined parameter information. For example, when a user terminal fails to detect the downlink control information in which the information about the random backoff counter value is contained, there is a threat that the user terminal cannot generate the random backoff counter value.

To prevent problems like this, a user terminal may be structured to be able to determine the counter value based on a predetermined value or a value that is randomly selected from a predetermined range, when the user terminal is unable to acquire the information about the random backoff counter value or predetermined parameter information.

For example, when a user terminal cannot acquire the information about the counter value, the maximum value (for example, the maximum value for the CW size) that can be reported from the radio base stations is used as the counter value or the seed value. By this means, it is possible to prevent the situation where a short backoff period (counter value) is configured in a user terminal that has failed to detect the downlink control information containing the counter value, and where this user terminal starts transmission earlier than other user terminals that have successfully detected the downlink control information (in other words, the situation where other user terminals cannot be multiplexed).

Alternatively, when a user terminal is unable to acquire the information about the counter value, this user terminal may randomly select a value from a predetermined range and use the selected value as the counter value or as the seed value.

(Second Example)

A method of controlling random backoff counter values when a plurality of cells to employ listening (UL-LBT) are configured in a user terminal will be described with a second example.

When the counter value varies between neighboring CCs (cells) in UL transmission, there is a thereat the result of listening shows the busy state (LBT-busy) due to UL transmission from neighboring CCs. Therefore, when a plurality of cells each transmit a UL signal by executing listening before transmitting the UL signal, a user terminal can control the random backoff counter value to be the same in listening executed in each cell. For example, a user terminal can control listening (UL transmission) by applying a common backoff counter value to all CCs that are configured.

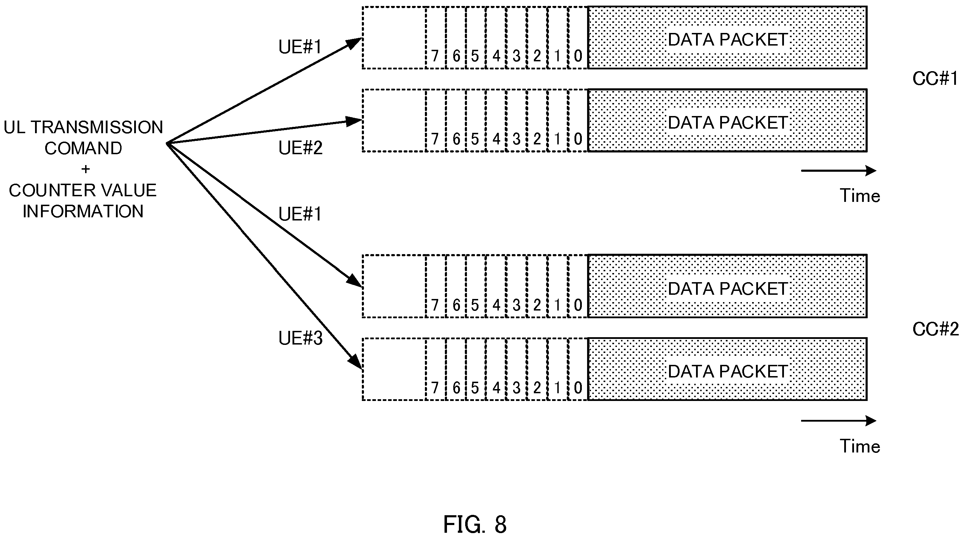

FIG. 8 shows an example of random backoff which a plurality of user terminals implement in a plurality of CCs of neighboring frequencies (here, CC #1 and CC #2). FIG. 8 shows a case where a radio base station sends UL transmission commands in CC #1 to a first user terminal and a second user terminal, and sends UL transmission commands in CC #2 to the first user terminal and a third user terminal, all at the same timing. That is, the radio base station controls to multiplex the UL transmissions of the first user terminal and the second user terminal in CC #1, and multiplex the UL transmissions of the first user terminal and the third user terminal in CC #2.

For example, the radio base station includes UL transmission commands in CC #1 in downlink control information (DCI), and transmits this to each of the first user terminal and the second user terminal. Similarly, the radio base station includes UL transmission commands in CC #2 in DCI, and transmits this to each of the first user terminal and the third user terminal. In this case, the radio base station can assign and transmit the DCI including the UL transmission commands in CC #1 and the DCI including the UL transmission commands in CC #2, to one of the downlink control channels of CC #1 and CC #2, by employing cross-carrier scheduling.

Also, when the radio base station reports information about the random backoff counter value to a user terminal, if the user terminal is connected with multiple CCs (here, the first user terminal), the radio base station may report the counter value-related information by using downlink control information (or higher layer signaling) that correspond to at least one CC.

The first user terminal, the second user terminal and the third user terminal can generate the same counter value (here, the counter value = 7) based on the information about the random backoff counter value reported from the radio base station and/or based on predetermined parameter information.

By thus carrying out UL transmission by applying the same random backoff counter value to each UL transmission in separate CCs, it is possible to allow each CC to carry out adequate UL transmission, and achieve improved spectral efficiency.

(Structure of Radio Communication System)

Now, the structure of the radio communication system according to an embodiment of the present invention will be described below. In this radio communication system, the radio communication methods according to the embodiments of the present invention are employed. Note that the radio communication methods of the above-described example s may be applied individually or may be applied in combination.

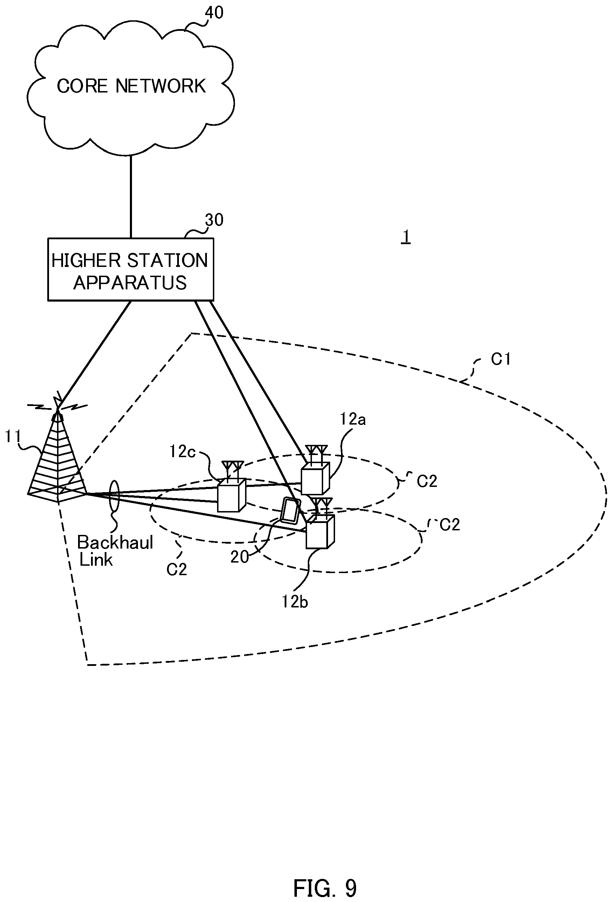

FIG. 9 is a diagram to show an example of a schematic structure of a radio communication system according to an embodiment of the present invention. Note that the radio communication system shown in FIG. 9 is a system to incorporate, for example, an LTE system, super 3G, an LTE-A system and so on. In this radio communication system, carrier aggregation (CA) and/or dual connectivity (DC) to bundle multiple component carriers (CCs) into one can be used. Also, these multiple CCS include licensed band CCs to use licensed bands and unlicensed band CCs to use unlicensed bands may be included. Note that this radio communication system may be referred to as "IMT-Advanced," or may be referred to as "4G," "5G," "FRA" (Future Radio Access) and so on.

The radio communication system 1 shown in FIG. 9 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

<Radio base station >

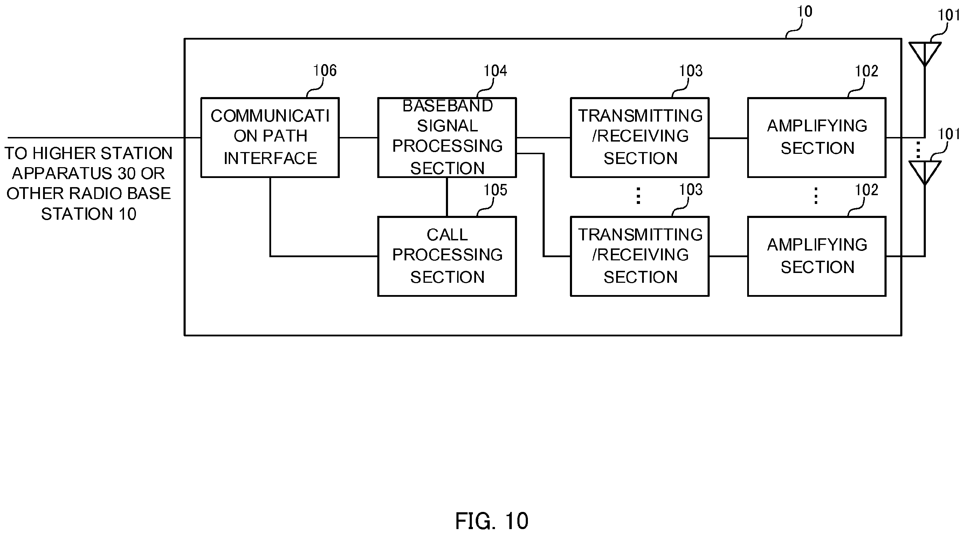

FIG. 10 is a diagram to show an example of an overall structure of a radio base station according to one embodiment of the present invention. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

For example, the transmitting/receiving sections (transmitting sections) 103 transmit UL transmission commands (UL grants). Also, when a user terminal generates the random backoff counter value in in UL-LBT based on information from the radio base station, the transmitting/receiving sections (transmitting sections) 103 transmit information about the counter value. Also, when the transmitting/receiving sections 103 transmit DL signals in an unlicensed band, the transmitting/receiving sections 103 can transmit the DL signal based on the result of listening that is executed before this DL signal is transmitted. Note that, for the transmitting/receiving sections 103, transmitters/receivers, transmitting/receiving circuits or transmitting/receiving devices that can be described based on common understanding of the technical field to which the present invention pertains can be used.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

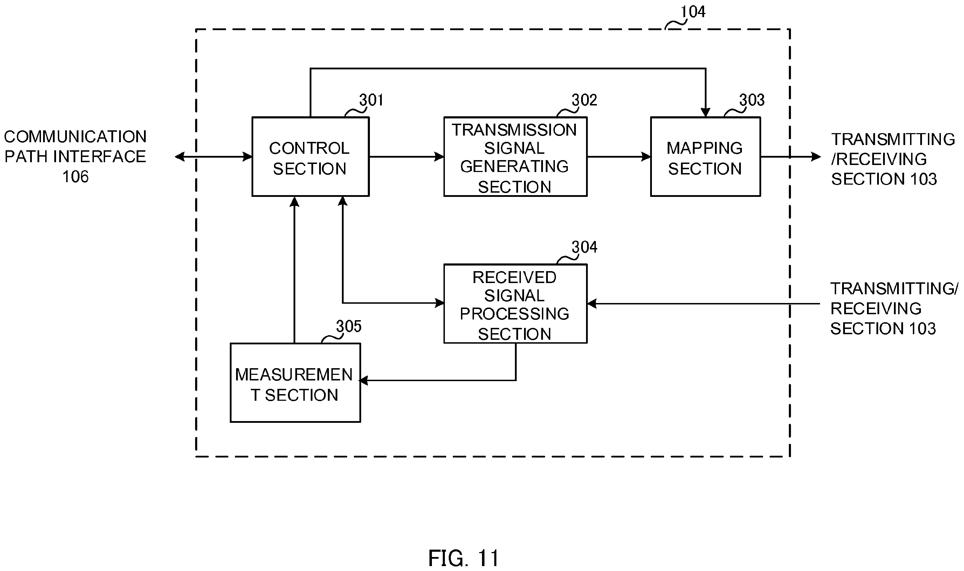

FIG. 11 is a diagram to show an example of a functional structure of a radio base station according to the present embodiment. Note that, although FIG. 11 primarily shows functional blocks that pertain to characteristic parts of the present embodiment, the radio base station 10 has other functional blocks that are necessary for radio communication as well. As shown in FIG. 11, the baseband signal processing section 104 has a control section (scheduler) 301, a transmission signal generating section (generating section) 302, a mapping section 303, a received signal processing section 304 and a measurement section 305.

The control section (scheduler) 301 controls the scheduling (for example, resource allocation) of downlink data signals that are transmitted in the PDSCH and downlink control signals that are communicated in the PDCCH and/or the EPDCCH. Furthermore, the control section (scheduler) 301 also controls the scheduling of system information, synchronization signals, paging information, CRSs, CSI-RSs and so on.

Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on. Also, the control section 301 controls the generation of information about the counter value, which is reported to each user terminal, so that the same random backoff counter value is generate between user terminals that are commanded UL transmission command at the same timing. Also, the control section 301 controls the transmission of DL signals based on the result of listening (DL LBT).

Note that, for the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal assignment information, and UL grants, which report uplink signal assignment information, based on commands from the control section 301. Also, the transmission signal generating section 302 can include the information about the random backoff counter value in DL signals that are transmitted in unlicensed bands. Also, the transmission signal generating section 302 can include the information about the counter value in UL grants. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301. For the received signal processing section 304, a signal processor/measurer, a signal processing/measurement circuit or a signal processing/measurement device that can be described based on common understanding of the technical field to which the present invention pertains can be used.

Also, by using the received signals, the measurement section 305 may measure the received power (for example, the RSRP (Reference Signal Received Power)), the received quality (for example, the RSRQ (Reference Signal Received Quality)), channel states and so on. Also, upon listening before DL signal transmission in unlicensed bands, the measurement section 305 can measure the received power of signals transmitted from other systems and/or the like. The results of measurements in the measurement section 305 are output to the control section 301. The control section 301 can control the transmission of DL signals based on measurement results (listening results) in the measurement section 305.

The measurement section 305 can be constituted by a measurer, a measurement circuit or a measurement device that can be described based on common understanding of the technical field to which the present invention pertains.

<User terminal >

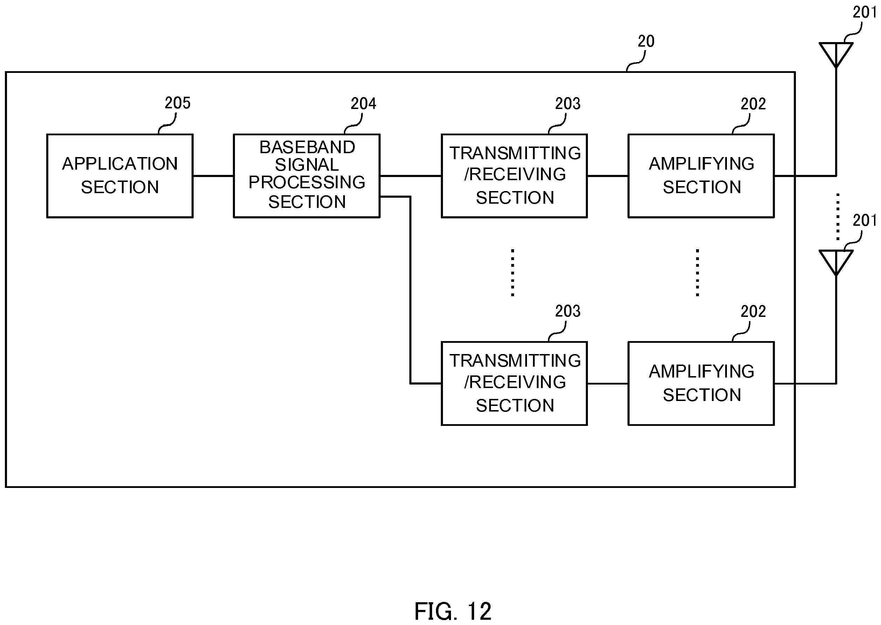

FIG. 12 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections (receiving sections) 203 can receive DL signals (for example, UL grants) that commands DL transmission in unlicensed bands. Also, the transmitting/receiving sections (receiving sections) 203 can receive the information about the random backoff counter value for use in UL-LBT. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

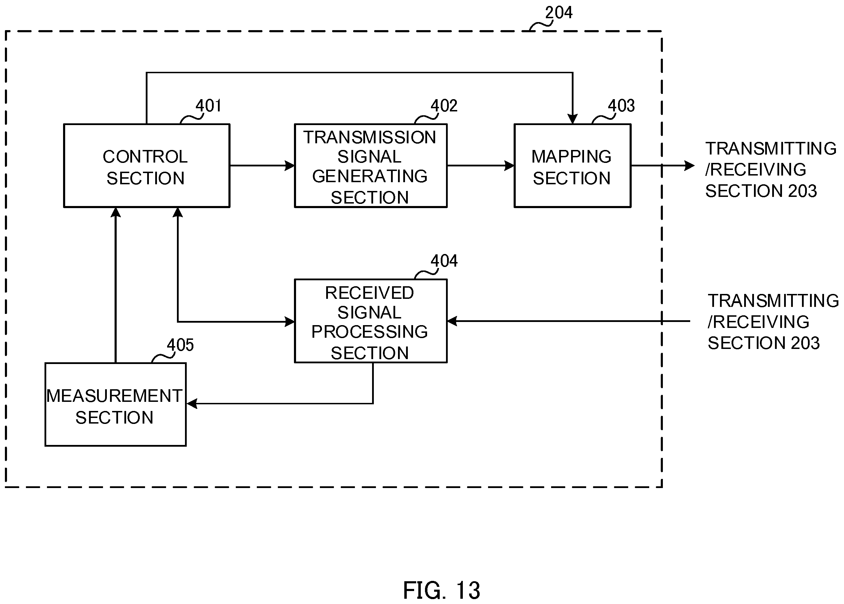

FIG. 13 is a diagram to show an example of a functional structure of a user terminal according to the present embodiment. Note that, although FIG. 13 primarily shows functional blocks that pertain to characteristic parts of the present embodiment, the user terminal 20 has other functional blocks that are necessary for radio communication as well. As shown in FIG. 13, the baseband signal processing section 204 provided in the user terminal 20 has a control section 401, a transmission signal generating section 402, a mapping section 403, a received signal processing section 404 and a measurement section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission (UL transmission) of uplink control signals (for example, HARQ-ACKs and so on) and uplink data based on downlink control information (UL grants), the result of deciding whether or not retransmission control is necessary for downlink data, and so on. Also, the control section 401 controls the transmission of UL signals based on the result of listening (UL LBT).

The control section 401 controls the transmission of UL signals by controlling the random backoff counter value in listening. In this case, the control section 401 can determine the random backoff counter value based on information that is reported from the radio base station and/or based on predetermined parameter information.

For example the control section 401 can control the random backoff counter value based on information that is reported from downlink control information (DCI), RRC signaling and/or broadcast information reported from the radio base station (see FIG. 6). To be more specific, the control section 401 controls the random backoff counter value to be the same as the random backoff counter value of another user terminal that has received a UL transmission command from the radio base station in the same subframe.

Alternatively, the control section 401 can control can control the random backoff counter value based on at least one of the system frame number in which a UL signal is transmitted, the subframe number in which the UL signal is transmitted, the identifier of the cell in which the UL signal is transmitted, and the contention window size which is applied to listening (see FIG. 7).

Also, the control section 401 can control not to transmit UL signals when the channel is judged to be in the busy state while counting down the random backoff. When a UL signal is not transmitted, the control section 401 can control to report information to the effect that the UL signal is not transmitted, and/or information about the random backoff counter value of when the channel is in the busy state, to the radio base station.

When a plurality of cells (CCs) each make UL transmission by executing listening before transmitting a UL signal, the control section 401 can control the random backoff counter value to be the same in listening executed in each cell (see FIG. 8).

Also, when the information about the random backoff counter value transmitted from the radio base station cannot be received, the control section 401 can determine the random backoff counter value based on a predetermined value or a value that is randomly selected from a predetermined range. Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the measurement section 405. Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section according to the present invention.

Also, by using the received signals, the measurement section 405 may measure the received power (for example, the RSRP (Reference Signal Received Power)), the received quality (RSRQ (Reference Signal Received Quality)), channel states and so on. Furthermore, upon listening that is executed before UL signals are transmitted in unlicensed bands, the measurement section 405 can measure the received power of signals transmitted from other systems and so on. The results of measurements in the measurement section 405 are output to the control section 401. The control section 401 can control the transmission of UL signals based on measurement results (listening results) in the measurement section 405.

The measurement section 405 can be constituted by a measurer, a measurement circuit or a measurement device that can be described based on common understanding of the technical field to which the present invention pertains.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The example s/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-159988, filed on August 13, 2015, including the specification, drawings and abstract, is incorporated herein by reference in its entirety.

**Claims**

1. A user terminal that communicates with a radio base station by executing listening before transmitting UL signals, the user terminal comprising:

   a transmission section that transmits a UL signal; and
   a control section that controls transmission of the UL signal by controlling a random backoff counter value in listening,
   wherein the control section determines the random backoff counter value based on information that is reported from the radio base station and/or based on predetermined parameter information.

2. The user terminal according to claim 1, wherein the control section determines the random backoff counter value based on information included in downlink control information, RRC signaling and/or broadcast information reported from the radio base station.

3. The user terminal according to claim 1 or claim 2, wherein the control section determines the random backoff counter value based on at least one of a system frame number in which the UL signal is transmitted, a subframe number in which the UL signal is transmitted, an identifier of a cell in which the UL signal is transmitted, and a contention window size which is applied to listening.

4. The user terminal according to one of claim 1 to 3, wherein, when a channel is judged to be in a busy state while random backoff is counted down, the control section controls the UL signal not to be transmitted.

5. The user terminal according to claim 4, wherein, when the UL signal is not transmitted, the control section reports information to the effect that the UL signal is not transmitted, and/or information about the random backoff counter value of when the channel is in the busy state, to the radio base station.

6. The user terminal according to one of claim 1 to claim 5, wherein, when a plurality of cells each transmit a UL signal by executing listening before transmitting the UL signal, the control section controls a same random backoff counter value to be used in listening executed in each cell.

7.  The user terminal according to one of claim 1 to claim 6, wherein, when information about the random backoff counter value transmitted from the radio base station cannot be received, the control section determines the random backoff counter value based on a predetermined value or a value that is randomly selected from a predetermined range.

8.  The user terminal according to one of claim 1 to claim 7, wherein the control section controls the random backoff counter value to be the same as a random backoff counter value of another user terminal that receives a UL transmission command from the radio base station in a same subframe.

9.  A radio base station that communicates with a user terminal that executes listening before transmitting UL signals, the radio base station comprising:

    a transmission section transmits a DL signal to the user terminal; and
    a receiving section that receives a UL signal that is transmitted from the user terminal based on a random backoff counter value in listening,
    wherein the transmission section transmits information which the user terminal uses to determine the random backoff counter value.

10. A radio communication method for a user terminal that communicates with a radio base station by executing listening before transmitting UL signals, the radio communication method comprising the steps of:

    determining a random backoff counter value in listening; and
    controlling transmission of a UL signal by controlling the random backoff counter value,
    wherein the random backoff counter value is determined based on information that is reported from the radio base station and/or based on predetermined parameter information.

EP 3 337 212 A1

FIG. 1A

1 ms period — Burst length

| X | No transmission | O | Transmission | | |

LBT
duration

LBT
duration

No LBT during burst

FIG. 1B

1 ms period — Burst length

| XXXX | O | Transmission | |

LBT and extended CCA

O : LBT-idle

X : LBT-busy

eNB

LBT | DL Tx

LBT IS NOT REQUIRED

BURST PERIOD

LBT | DL Tx

LBT IS NOT REQUIRED

BURST PERIOD

Time

FIG. 2

FIG. 3A — boxes: | D | S | U | U | U | D | D | D | D | D |

FIG. 3B — boxes: | D/U | D/U | D/U | D/U | D/U | D/U | D/U | D/U | D/U | D/U |

**FIG. 3A**

**FIG. 3B**

EP 3 337 212 A1

FIG. 4

PACKET GENERATED ⇒
COUNTER VALUE GENERATED
(RANDOM VALUE 1~16)

LBT-busy

UL TRANSMISSION
COMMAND

UE#1

7 6 5 4 3 2 1 0

UE#2

5 4 3 2 1 0

DATA PACKET

Time

PACKET GENERATED ⇒
COUNTER VALUE GENERATED
(RANDOM VALUE 1~16)

FIG. 5

EP 3 337 212 A1

PACKET GENERATED
⇒COUNTER VALUE GENERATED
(PREDETERMINED VALUE)

UL TRANSMISSION COMAND
+
COUNTER VALUE
INFORMATION

UE#1

5 4 3 2 1 0  DATA PACKET

UE#2

5 4 3 2 1 0  DATA PACKET

PACKET GENERATED
⇒COUNTER VALUE GENERATED
(PREDETERMINED VALUE)

Time

FIG. 6

RANDOM BACKOFF IS EXECUTED (COUNTER VALUE 4)

RANDOM BACKOFF IS EXECUTED (COUNTER VALUE 13)

RANDOM BACKOFF IS EXECUTED (COUNTER VALUE 2)

UL grant

UL grant

UL grant

SUBFRAME#4

SUBFRAME#9

SUBFRAME#0

SFN#0

SFN#2

SFN#5

FIG. 7

FIG. 8

FIG. 9

FIG. 10

FIG. 11

FIG. 12

EP 3 337 212 A1

FIG. 13

EP 3 337 212 A1

## INTERNATIONAL SEARCH REPORT

| | International application No. |
|---|---|
| | PCT/JP2016/073469 |

| A. CLASSIFICATION OF SUBJECT MATTER |
|---|
| *H04W16/14*(2009.01)i, *H04W72/04*(2009.01)n |

According to International Patent Classification (IPC) or to both national classification and IPC

| B. FIELDS SEARCHED |
|---|
| Minimum documentation searched (classification system followed by classification symbols) |
| H04W16/14, H04W72/04 |

Documentation searched other than minimum documentation to the extent that such documents are included in the fields searched

| Jitsuyo Shinan Koho | 1922–1996 | Jitsuyo Shinan Toroku Koho | 1996–2016 |
|---|---|---|---|
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | ETRI, Discussion on UL grant for LAA[online],<br>3GPP TSG-RAN WG1#80b R1-152095, URL:http://www.<br>3gpp.org/ftp/tsg_ran/WG1_RL1/TSGR1_80b/Docs/<br>R1-152095.zip, 2015.04.20 | 1,2,4,8-10<br>1,3,5,10<br>6,7 |
| Y<br>A | ZTE, LBT Impacts On High Layers for LAA[online],<br>3GPP TSG-RAN WG2#90 R2-152327, URL:http://www.<br>3gpp.org/ftp/tsg_ran/WG2_RL2/TSGR2_90/Docs/R2-<br>152327.zip, 2015.05.25 | 1,3,5,10<br>2,4,6-8,9 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 October 2016 (06.10.16) | 18 October 2016 (18.10.16) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2016/073469 |

Object to be covered by this search:
Claim 8 recites a user terminal which, upon receiving a subframe indicating a UL transmission instruction from a wireless base station, adjusts the random backoff counter value of the user terminal to be equal to that of another user terminal which has received the same subframe from the wireless base station. Claim 7, meanwhile, which is cited by claim 8, indicates that a user terminal (corresponding to the user terminal of claim 8) determines a random backoff counter value on the basis of a randomly selected value if the user terminal cannot receive information transmitted from a wireless base station.

The description, however, fails to clearly and sufficiently describe how the user terminal adjusts the random backoff counter value of the user terminal to be equal to that of another user terminal when the random backoff counter value of the user terminal is to be determined based on a randomly selected value; even a person skilled in the art could not carry out the invention of claim 8. Thus, the requirements under PCT Article 5 are not met.

Therefore, since a meaningful search cannot be carried out with respect to claim 8 referring to claim 7, it has been decided not to carry out a search on said claim 8.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015159988 A